(19) Europäisches Patentamt
European Patent Office
Office européen des brevets

(11) **EP 1 750 321 B1**

(12) **EUROPÄISCHE PATENTSCHRIFT**

(45) Veröffentlichungstag und Bekanntmachung des Hinweises auf die Patenterteilung:
**02.12.2015 Patentblatt 2015/49**

(51) Int Cl.:
*H01M 8/04* (2006.01)       *H01M 8/06* (2006.01)
*H01M 8/24* (2006.01)

(21) Anmeldenummer: **05016543.0**

(22) Anmeldetag: **29.07.2005**

(54) **Verfahren zum Betrieb einer Brennstoffzellenanordnung mit einem Gasgemisch mit einem Reaktionsgasanteil und einem Inertgasanteil sowie dafür geeignete Brennstoffzellenanordnung**

Method of operating a fuel cell arrangement with a gas mixture comprising an inert gas proportion and a reaction gas proportion and fuel cell arrangement therefor

Procédé d'opération d'un ensemble de piles à combustible avec un mélange gazeux comprenant une proportion d'un gaz inerte et une proportion d'un gaz de réaction et batterie de piles à combustible pour celui-ci

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**07.02.2007 Patentblatt 2007/06**

(73) Patentinhaber: **Siemens Aktiengesellschaft 80333 München (DE)**

(72) Erfinder: **Mattejat, Arno, Dr. 91056 Erlangen (DE)**

(56) Entgegenhaltungen:
US-A- 3 553 026      US-A- 3 668 011
US-A- 3 711 333      US-A1- 2003 022 041
US-A1- 2004 185 316

**Beschreibung**

Die Erfindung betrifft ein Verfahren zum Betrieb einer Brennstoffzellenanordnung mit einem Gasgemisch mit einem Reaktionsgasanteil und einem Inertgasanteil, wobei das Gasgemisch nacheinander mehrere Brennstoffzellengruppen durchströmt, deren Brennstoffzellen jeweils parallel von dem Gasgemisch durchströmt werden. Die Erfindung betrifft weiterhin eine Brennstoffzellenanordnung mit mehreren Brennstoffzellengruppen, die hintereinander in eine Gasversorgungseinrichtung geschaltet sind und deren Brennstoffzellen jeweils parallel über die Gasversorgungseinrichtung von einem Gasgemisch mit einem Reaktionsgasanteil und einem Inertgasanteil durchströmbar sind.

In Brennstoffzellen wird üblicherweise durch die Zusammenführung der Reaktionsgase Wasserstoff und Sauerstoff in einer elektrochemischen Reaktion elektrische Energie erzeugt. Der Wasserstoff wird den Brennstoffzellen entweder in reiner Form oder als Brenngas mit einem Wasserstoffanteil und der Sauerstoff wird den Brennstoffzellen entweder in reiner Form oder in Form von Luft zugeführt.

Die Form, in der der Wasserstoff und der Sauerstoff den Brennstoffzellen zugeführt werden, hängt wesentlich von der Betriebsumgebung ab, in der die Brennstoffzellen betrieben werden. Werden die Brennstoffzellen beispielsweise in einem hermetisch verschlossenen Raum betrieben, so sollen die Brennstoffzellen eine möglichst geringe Menge an Abgasen produzieren, da diese sonst gesammelt und gegebenenfalls komprimiert werden müssen. Derartige Brennstoffzellen werden daher meist mit reinem Sauerstoff und reinem Wasserstoff betrieben, mit dem Ziel, dass diese Reaktionsgase während des Betriebs der Brennstoffzellen im Wesentlichen rückstandsfrei zu Wasser reagieren und die Brennstoffzellen somit so gut wie keine Abgase erzeugen.

Wird Brenngas von einem Reformer erzeugt, so liegt es an dessen Ausgang nicht in reiner Form, sondern als Gasgemisch mit hohen Anteilen an Wasser und Inertgasen wie z.B. Kohlendioxyd, Stickstoff und Kohlenmonoxyd vor. Um auch hier einen möglichst abgasfreien Betrieb ermöglichen zu können, wird das Gasgemisch zunächst gereinigt und von den unerwünschten Bestandteilen befreit. Das für die Brennstoffzellen schädliche Kohlenmonoxyd kann auf chemischem Wege zu Kohlendioxyd oder Methan umgesetzt werden. Das Wasser kann leicht durch Kondensation entfernt werden. Für die Entfernung der verbleibenden Inertgasanteile, typischerweise in Höhe von 10 bis 60 Vol %, benutzt man normalerweise Trennmembranen, die aus dünnen Metallfolien bestehen. Diese Membranen sind jedoch teuer, anfällig gegen thermische Wechselbelastungen und werden im Falle von Leckagen unbrauchbar.

Das Dokument US 2004/0185316 A1 offenbart eine Brennstoffzellenanordnung, bei der ein Gasgemisch bestehend aus einem Reaktionsgasanteil und einem Inertgasanteil nacheinander mehrere Brennstoffzellengruppen durchströmt, deren Brennstoffzellen jeweils parallel von dem Gasgemisch durchströmt werden. Die in dem Gasgemisch enthaltenen Inertgasanteile werden in einer Spülzelle gesammelt, wodurch sich die Leistung der Spülzelle verringert. Wenn ein Spülzellenspannungssensor einen Leistungsabfall unterhalb eines Grenzwertes erfasst, wird ein Spülventil geöffnet und die Inertgasanteile durch eine Erhöhung der Gaszufuhr zu der Brennstoffzellenanordnung ausgetragen.

Im Dokument US 3,711,333 ist eine Brennstoffzellenanordnung beschrieben, bei der ein sauerstoffhaltiges Gasgemisch nacheinander mehrere Brennstoffzellengruppen durchströmt, deren Brennstoffzellen jeweils parallel von dem Gasgemisch durchströmt werden. Durch die Anordnung der Brennstoffzellen in Form einer Kaskade mit abnehmender Anzahl von Brennstoffzellen nimmt der Volumenstrom des Gasgemisches durch die Brennstoffzellen zu. Gleichzeitig nimmt der Inertgasanteil in dem Gasgemisch zu und der Sauerstoffanteil ab.

In der US 3 668 011 A ist eine Brennstoffzellen-Batterie beschrieben, die mehrere, in Reihe geschaltete Brennstoffzellengruppen umfasst. Jede Brennstoffzellengruppe enthält mehrere Brennstoffzellen, die parallel zueinander geschaltet sind. Dabei nimmt in Strömungsrichtung die Anzahl der Brennstoffzellen in jeder weiteren Brennstoffzellengruppe im Vergleich zur vorigen Brennstoffzellengruppe ab. Ziel dieser Anordnung ist, einen hohen Strömungswiderstand in den Brennstoffzellen zu überwinden und eine ausreichende Zufuhr an Reaktionsgas zu ermöglichen.

Es ist Aufgabe vorliegender Erfindung, ein Verfahren zum Betrieb einer Brennstoffzellenanordnung und eine für die Durchführung des Verfahrens geeignete Brennstoffzellenanordnung anzugeben, die bei Verwendung von reaktionsgashaltigen Gasgemischen mit relativ hohen Inertgasanteilen über 10 Vol % einen Betrieb der Brennstoffzellenanordnung mit einem guten Wirkungsgrad und geringen Abgasmengen ermöglicht, wobei auf den Einsatz von Trennmembranen zur Entfernung der Inertgasbestandteile aus dem Gasgemisch verzichtet werden kann.

Die auf das Verfahren gerichtete Aufgabe wird gelöst durch ein Verfahren mit den Merkmalen des Patentanspruches 1. Die auf die Brennstoffzellenanordnung gerichtete Aufgabe wird gelöst durch eine Brennstoffzellenanordnung mit den Merkmalen des Patentanspruchs 6. Vorteilhafte Ausgestaltungen sind jeweils Gegenstand der Unteransprüche.

Die Erfindung geht von der Überlegung aus, dass auf die Trennmembrane verzichtet werden kann, wenn die Brennstoffzellenanordnung so ausgelegt ist, dass sie mit den hohen Inertgasanteilen von über 10 Vol % betrieben werden kann.

Grundsätzlich kann eine stabile Energieerzeugung und ein guter Wirkungsgrad beim Betrieb einer Brennstoffzellenanordnung mit einem reaktionsgashaltigen Gasgemisch mit hohen Inertgasanteilen von über 10 Vol % dann beobachtet werden, wenn sämtliche Brennstoffzellen der Brennstoffzellenanordnung parallel von dem Gasgemisch durchströmt werden, wobei dies mit einem Volumenstrom erfolgt, der deutlich höher als der für die vollständige elektrochemische Reaktion des Reaktionsgasanteils in den Brennstoffzellen tatsächlich benötigte Volumstrom ist. Hierdurch verlässt jedoch ein hoher Anteil des Reaktionsgases die Brennstoffzellen, ohne an der Reaktion beteiligt zu sein, was zum einen den Betrieb des Gesamtsystems aus Reformer und Brennstoffzellenanordnung unwirtschaftlich macht, zum anderen aber auch in vielen Anwendungsfällen, insbesondere beim Betrieb der Brennstoffzellenanordnung in einem hermetisch abgeschlossenen Raum, unerwünscht ist.

Der Reaktionsgasverlust kann wiederum dann klein gehalten werden, wenn das reaktionsgashaltige Gasgemisch die Brennstoffzellen nicht parallel, sondern nacheinander (bzw. seriell) durchströmt. Auf diese Weise wird das Reaktionsgas in Strömungsrichtung durch die Brennstoffzellen immer vollständiger aufgebraucht. Allerdings führt dies zu einer Aufkonzentration der Inertgasanteile in dem Gasgemisch, d.h. der Anteil der Inertgase an dem reaktionsgashaltigen Gasgemisch steigt ständig an, was mit einer entsprechender Verschlechterung des Wirkungsgrades der Brennstoffzellen verbunden ist.

Diese gegensätzlichen Effekte werden erfindungsgemäß dadurch zusammengebracht, dass das Verhältnis des zwischen in die jeweilige Zellgruppe eingeleitetem Volumenstrom des Gasgemisches zu dem für eine vollständige Reaktion des Reaktionsgasanteils in dieser Zellgruppe stöchiometrisch benötigten Volumenstrom des Gasgemisches für drei nacheinander durchströmte Zellgruppen zunimmt.

Die Hintereinanderschaltung der Brennstoffzellengruppen führt zwar zu einer Aufkonzentration des Inertgasanteiles in Strömungsrichtung des Gasgemisches, d.h. der Anteil der Inertgase an dem Gasgemisch nimmt in Strömungsrichtung des Gasgemisches stetig zu, aber gleichzeitig nimmt auch das Verhältnis des in die Zellgruppen eintretenden Volumenstromes des Gasgemisches zum tatsächlich für die vollständige elektrochemische Reaktion benötigten Volumenstrom des Gasgemisches zu. Der geringere Reaktionsgasanteil im Gasgemisch in einer nachfolgend durchströmten Zellgruppe wird somit zumindest teilweise ausgeglichen durch einen entsprechend größeren Volumenstrom des Gasgemisches in der nachfolgend durchströmten Zellgruppe im Vergleich zur vorher durchströmten Zellgruppe. Auf diese Weise steht den Brennstoffzellen der nachfolgend durchströmten Zellgruppe ausreichend Reaktionsgas für eine stabile elektrochemische Reaktion und einen guten Wirkungsgrad zur Verfügung, bei gleichzeitiger Abnahme der Konzentration des Reaktionsgases in dem Gasgemisch. Somit verlässt die Brennstoffzellenanordnung ein Rest-Gasgemisch, das im Gegensatz zu dem einer einzigen, rein parallel versorgten Zellgruppe eine wesentlich niedrigere Konzentration an Reaktionsgas enthält. Der Verlust an Reaktionsgas wird hierdurch erheblich vermindert. Das Rest-Gasgemisch kann ohne große Wirkungsgradverluste für das Gesamtsystem aus Reformer und Brennstoffzellenanordnung beispielsweise dem Brenner im Reformer zugeführt werden.

Das Verfahren kann sowohl für die Anodenseiten der Brennstoffzellen als auch für die Kathodenseiten der Brennstoffzellen Anwendung finden, d.h. bei dem Reaktionsgas kann es sich auf der Anodenseite um ein von einem Reformer erzeugtes Brenngas bzw. auf der Kathodenseite um Luft handeln.

Die gewünschte Zunahme des Volumenstrom-Verhältnisses kann über die Anzahl und/oder Größe der Brennstoffzellen und/oder die Stromdichte der einzelnen Zellgruppen eingestellt werden. Bevorzugt umfassen die Brennstoffzellengruppen jeweils gleichartige Brennstoffzellen, und die gewünschte Zunahme des Verhältnisses wird über die Anzahl der Brennstoffzellen in den Brennstoffzellengruppen eingestellt. Unter gleichartigen Brennstoffzellen werden hierbei hinsichtlich Größe und Struktur gleiche Brennstoffzellen verstanden.

Bevorzugt durchströmt das Gasgemisch nacheinander so viele Zellgruppen, bis der Reaktionsgasanteil in dem Gasgemisch einen gewünschten vordefinierten Wert unterschreitet.

Bei einer erfindungsgemäßen Brennstoffzellenanordnung sind mehrere Brennstoffzellengruppen hintereinander in eine Gasversorgungseinrichtung geschaltet. Die Brennstoffzellen der Brennstoffzellengruppen sind jeweils parallel von dem Reaktionsgas durchströmbar, wobei die Brennstoffzellengruppen derart ausgebildet sind, dass drei hintereinander in die Gasversorgungseinrichtung geschaltete Zellgruppen mit einem jeweils zunehmenden Verhältnis zwischen dem in die jeweilige Zellgruppe eingeleitetem Volumenstrom des Gasgemisches zu dem für eine vollständige Reaktion des Reaktionsgasanteils in dieser Zellgruppe stöchiometrisch benötigtem Volumenstrom des Gasgemisches durchströmbar sind, wobei das zunehmende Verhältnis über die Anzahl der Brennstoffzellen und/oder die Größe der Brennstoffzellen und/oder die Stromdichte der Brennstoffzellengruppen eingestellt ist.

Die Brennstoffzellengruppen können beispielsweise aus jeweils einem Brennstoffzellenstapel bestehen. Sämtliche dieser Brennstoffzellenstapel können dann in einem einzigen Brennstoffzellenblock zusammengefasst sein, d.h. einen so genannten "kaskadierten" Brennstoffzellenblock bilden.

Jede der Brennstoffzellengruppen kann aber auch aus einem oder mehreren jeweils parallel mit dem Gasgemisch versorgten Brennstoffzellenblöcken bestehen und somit eine Stufe einer Brennstoffzellenanlage mit mehreren in einer Kaskade angeordneten Stufen bilden.

Die im Hinblick auf das erfindungsgemäße Verfahren angeführten Überlegungen und Vorteile gelten sinngemäß auch für die erfindungsgemäße Brennstoffzellenanordnung.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:

FIG 1    eine Prinzipdarstellung eines ersten Ausführungsbeispieles einer erfindungsgemäßen Brennstoffzellenanordnung,

FIG 2    eine Prinzipdarstellung eines zweiten Ausführungsbeispieles einer erfindungsgemäßen Brennstoffzellenanordnung und

FIG 3    eine Prinzipdarstellung eines dritten Ausführungsbeispieles einer erfindungsgemäßen Brennstoffzellenanordnung.

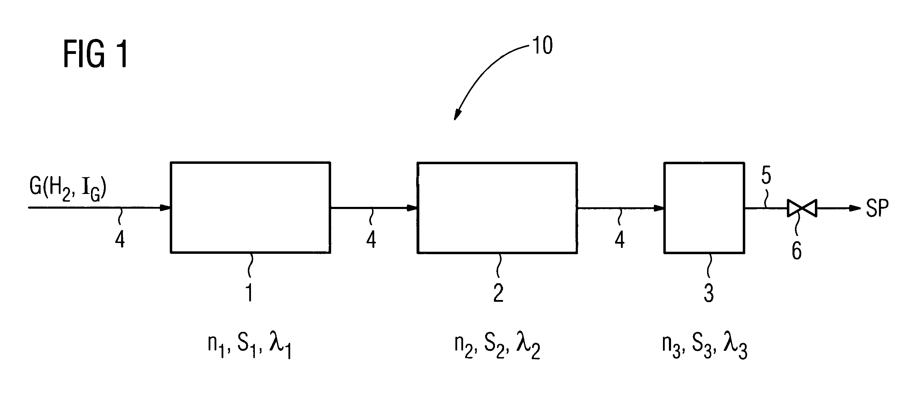

Eine in FIG 1 gezeigte erfindungsgemäße Brennstoffzellenanordnung 10 weist drei Brennstoffzellengruppen 1, 2, 3 auf, die nacheinander von einem Gasgemisch G, das einen Reaktionsgasanteil, hier einen Wasserstoffanteil H2, und einen Inertgasanteil IG, aufweist, durchströmt werden. Vor der Zufuhr des Gasgemisches G zu der ersten Zellgruppe 1 beträgt der Wasserstoffanteil H2 beispielsweise etwa 90 Vol % und der Inertgasanteil etwa 10 Vol %. Der Inertgasanteil IG umfasst Inertgase wie z.B. Stickstoff, Kohlendioxyd und Edelgase. Das Gasgemisch G strömt dann mittels der Gasversorgungsleitung 4 nacheinander durch die Zellgruppen 1, 2, 3 und verlässt die Brennstoffzellenanordnung über eine Restgasentsorgungsleitung 5, in die ein Ventil 6 zur Steuerung der Restgasentsorgung geschaltet ist. In den Zellgruppen 1, 2, 3 werden die Brennstoffzellen jeweils parallel von dem Gasgemisch H2, IG durchströmt.

Nach Anschluss eines elektrischen Verbrauchers an die Brennstoffzellen der Brennstoffzellengruppen 1, 2, 3 kommt es aufgrund der elektrochemischen Reaktion des Wasserstoffs H2 mit Sauerstoff in den Brennstoffzellen in Strömungsrichtung des Gasgemisches G durch die Brennstoffzellengruppen 1, 2, 3 zu einer Abnahme des Wasserstoffanteils H2 in dem Gasgemisch G. Damit steigt jedoch in Strömungsrichtung des Gasgemisches G der Inertgasanteil IG in dem Gasgemisch G an. Die damit einhergehende Abnahme des Wasserstoffanteils H2 wird nun dadurch ausgeglichen, dass das Verhältnis λ zwischen dem in die jeweilige Zellgruppe eingeleiteten Volumenstrom des Gasgemisches G zu dem für eine vollständige elektrochemische Reaktion des Wasserstoffanteils H2 in dieser Zellgruppe stöchiometrisch benötigtem Volumenstrom des Gasgemisches G für nacheinander durchströmte Zellgruppen zunimmt.

Ein derartiger Anstieg des Volumenstromes kann grundsätzlich über die Anzahl der die Anzahl der Brennstoffzellen und/oder die Größe der Brennstoffzellen und/oder die Stromdichte in den Brennstoffzellengruppen 1, 2, 3 eingestellt werden. Bevorzugt umfassen die Brennstoffzellengruppen 1, 2, 3 jeweils gleichartige, d.h. bezüglich Größe und Struktur gleiche, Brennstoffzellen, und das zunehmende Verhältnis λ ist über die Anzahl der Brennstoffzellen in den Brennstoffzellengruppen eingestellt.

Im Weiteren wird nun eine Spülrate S definiert als das Verhältnis zwischen dem Reaktionsgasanteil in dem eine Zellgruppe verlassenden Gasvolumenstrom und dem Reaktionsgasanteil in dem in die Zellgruppe eintretenden Gasvolumenstrom:

$$S = \frac{\text{Reaktionsgasanteil in dem eine Zellgruppe verlassenden Gasvolumenstrom}}{\text{Reaktionsgasanteil in dem in eine Zellgruppe eintretenden Gasvolumenstrom}}$$

Es wird hierbei nur der reaktionsfähige Anteil in dem Gasvolumenstrom betrachtet. Der Inertgasanteil wird hierbei nicht berücksichtigt, ist aber in einem funktionalen Zusammenhang an die Eingangskonzentration und den Verbrauch an Reaktionsgas in den Zellgruppen gekoppelt.

Das Verhältnis λ ist definiert als das Verhältnis zwischen dem einer Zellgruppe zugeführten Gasvolumenstrom zu dem für eine vollständige Reaktion des Reaktionsgasanteils in der Zellgruppe stöchiometrisch benötigten Gasvolumenstrom.

Im Folgenden wird nun vereinfacht davon ausgegangen, dass aufgrund einer elektrischen Reihenschaltung aller Zellen der Brennstoffzellenanordnung 10 durch alle diese Brennstoffzellen auch ein gleich großer elektrischer Strom fließt. Jede der Brennstoffzellen verbrauchen somit das gleiche Volumen $V_z$ an Wasserstoff pro Zeiteinheit, z.B. 1 Liter pro Stunde. Eine Brennstoffzellengruppe mit N Brennstoffzellen verbraucht somit pro Zeiteinheit ein Volumen $V_N = n*V_z$ an Wasserstoff. Für die Spülrate S bzw. das Verhältnis λ einer Zellgruppe mit n Brennstoffzellen gilt dann

$$S = \frac{\text{Anzahl der Zellen in nachfolgenden Zellgruppen}}{n + \text{Anzahl der Zellen in nachfolgenden Zellgruppen}}$$

$$\lambda = \frac{n + \text{Anzahl der Zellen in nachfolgenden Zellgruppen}}{n}$$

Hierbei wurde aber davon ausgegangen, dass keine Restgasentsorgung über die Restgasentsorgungsleitung 5 erfolgt. Um eine derartige Restgasentsorgung zu berücksichtigen, wird nun eine Restgasentsorgungsrate SP definiert als der die letzte Zellgruppe 3 verlassende Restgasvolumenstrom. Für den Fall, dass der Restgasvolumenstrom linear mit dem Gasverbrauch zusammenhängt, kann für die Restgasentsorgungsrate SP eine fiktive Zellenzahl n' eingesetzt werden. Es gilt somit

$$S = \frac{Anzahl\ der\ Zellen\ in\ nachfolgenden\ Zellgruppen + n'}{n + Anzahl\ der\ Zellen\ in\ nachfolgenden\ Zellgruppen + n'}$$

$$\lambda = \frac{n + Anzahl\ der\ Zellen\ in\ nachfolgenden\ Zellgruppen + n'}{n}$$

Für die Brennstoffzellengruppen 1, 2, 3 der Brennstoffzellenanordnung 10 gelten somit die folgenden Spülraten S1, S2 bzw. S3 und Verhältnisse λ1, λ2 bzw. λ3

$$S_1 = \frac{n_2 + n_3 + n'}{n_1 + n_2 + n_3 + n'} \quad , \quad S_2 = \frac{n_3 + n'}{n_2 + n_3 + n'} \quad , \quad S_3 = \frac{n'}{n_3 + n'}$$

und

$$\lambda_1 = \frac{n_1 + n_2 + n_3 + n'}{n_1} \quad , \quad \lambda_2 = \frac{n_2 + n_3 + n'}{n_2} \quad , \quad \lambda_3 = \frac{n_3 + n'}{n_3}$$

wobei n1, n2, n3 die jeweilige Anzahl parallel durchströmter Brennstoffzellen der Brennstoffzellengruppen 1, 2 bzw. 3 ist. Anhand dieser Formeln können nun n1, n2 und n3 derart gewählt werden, dass sich die gewünschte Zunahme von λ in Strömungsrichtung des Gasgemisches G durch die Zellgruppen 1, 2, 3 einstellt.

wird beispielsweise n1 = 20, n2 = 6, n3 = 3 und n' = 9 gewählt, ergibt sich

$$S_1 = \frac{6+3+9}{20+6+3+9} = 0.47 \quad , \quad S_2 = \frac{3+9}{6+3+9} = 0.66 \quad , \quad S_3 = \frac{9}{3+9} = 0.75$$

$$\lambda_1 = \frac{20+6+3+9}{20} = 1.9 \quad , \quad \lambda_2 = \frac{6+3+9}{6} = 3 \quad , \quad \lambda_3 = \frac{3+9}{3} = 4$$

und somit die gewünschte Zunahme von λ in Strömungsrichtung des Gasgemisches G durch die Brennstoffzellengruppen 1, 2 und 3.

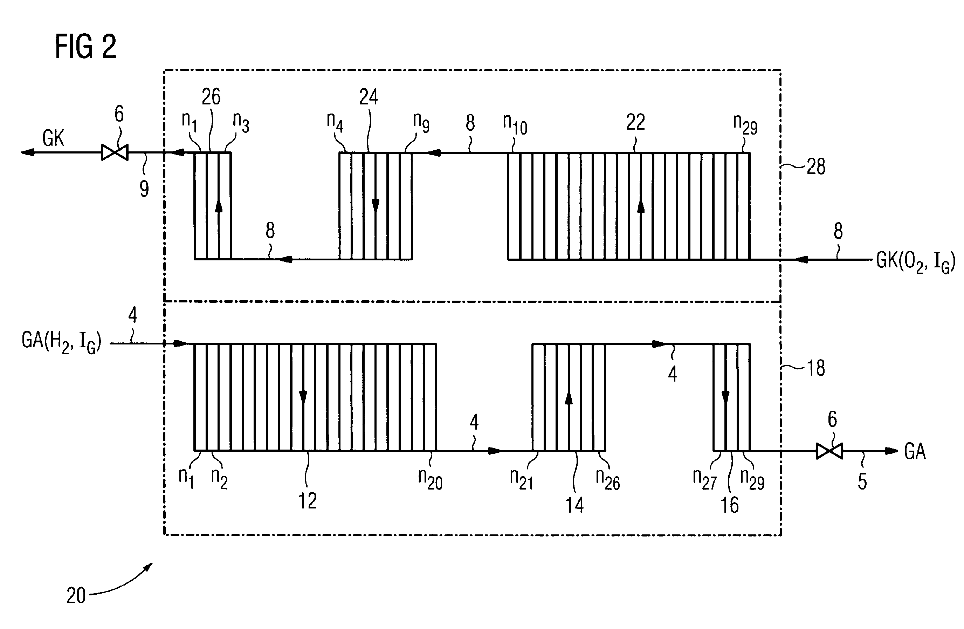

Wie in FIG 2 dargestellt, können sämtliche Brennstoffzellengruppen der Brennstoffzellenanordnung von FIG 1 in einem einzigen Brennstoffzellenblock zusammengefasst sein und somit einen kaskadierten Brennstoffzellenblock bilden.

Der in FIG 2 gezeigter Brennstoffzellenblock 20 ist aus 29 schematisch dargestellten Brennstoffzellen n1, n2,..., n29 aufgebaut. Zur besseren Übersicht sind in der Darstellung der FIG 2 die kathodenseitigen Gasräume der Brennstoffzellen n1 bis n29 über den anodenseitigen Gasräumen derselben Brennstoffzellen n1 bis n29 dargestellt.

Die Anodenseite 18 des Brennstoffzellenblocks 2 ist dabei in Strömungsrichtung eines anodenseitigen Gasgemisches GA mit einem Wasserstoffanteil H2 und einem Inertgasanteil IG zunächst in eine Zellgruppe 12 unterteilt, in der die Brennstoffzellen n1 bis n20 parallel durchströmt werden. Die sich daran anschließende Zellgruppe 14 verfügt über die parallel durchströmten Brennstoffzellen n21 bis n26. Daran schließt sich die Zellgruppe 16 mit drei parallel durchströmten Brennstoffzellen n26 bis n29 an. Die Zellgruppen 12, 14, 16 werden in dieser Reihenfolge sukzessive von dem Gasgemisch GA durchströmt

Die Kathodenseite 28 des Brennstoffzellenblocks 2 ist in Strömungsrichtung eines kathodenseitigen Gasgemisches GK mit einem Sauerstoffanteil 02 und einem Inertgasanteil IG zunächst in eine Zellgruppe 22, in der die Brennstoffzellen n29 bis n10 parallel durchströmt werden, eine zweite Zellgruppe 24, in der die Brennstoffzellen n9 bis n4 parallel durchströmt werden, und eine dritte Zellgruppe 26, in der die Brennstoffzellen n3 bis n1 parallel durchströmt werden, unterteilt. Die Zellgruppen 22, 24, 26 werden in dieser Reihenfolge von dem Gasgemisch GK sukzessive durchströmt.

Beim Betrieb des Brennstoffzellenblocks 20 strömt das anodenseitig Gasgemisch GA über die Wasserstoffversorgungsleitung 4 in den Brennstoffzellenblock 20. Der Wasserstoffanteil H2 des in den Brennstoffzellenblock 20 einströmenden anodenseitigen Gasgemisches GA liegt bei etwa 90 Vol %. Die übrigen 10 Vol % umfassen Inertgase wie z.B. Stickstoff, Kohlendioxyd und Edelgase. Das Gasgemisch GA strömt dann über die mittels der Gasversorgungsleitung 4 gasseitig nacheinander, d.h. in Serie, geschalteten Zellgruppen 12 bis 16 und verlässt den Brennstoffzellenblock 20 über eine Restgasentsorgungsleitung 5.

Das kathodenseitige Gasgemisch GK ist Luft mit einem Sauerstoffanteil 02 von etwa 60 Vol % und einem Inertgasanteil IG von etwa 40 Vol %. Das Gasgemisch GK wird über eine Sauerstoffversorgungsleitung 8 in die Zellgruppe 22 eingespeist, durchströmt die mittels der Gasversorgungsleitung 8 gasseitig nacheinander, d.h. in Serie, geschalteten Zellgruppen 24, 26 und verlässt den Brennstoffzellenblock 20 über eine weitere Restgasentsorgungsleitung 9.

Nach Anschluss eines elektrischen Verbrauchers an den Brennstoffzellenblock 20 kommt es aufgrund der elektrochemischen Reaktion der Wasserstoffanteile H2 mit den Sauerstoffanteilen 02 in den Brennstoffzellen n1 bis n29 in Strömungsrichtung der Gasgemische GA und GK durch den Brennstoffzellenblock 20 zu einer Abnahme des Sauerstoffanteils 02 in dem kathodenseitigen Gasgemisch GK und des Wasserstoffanteils H2 in dem anodenseitigen Gasgemisch GA. Damit steigt jedoch in Strömungsrichtung der Gasgemische GA, GK sowohl auf der Anodenseite 18 als auch auf der Kathodenseite 28 der Inertgasanteil IG in dem jeweiligen Gasgemisch GA, GK an. Die damit einhergehende Abnahme des Reaktionsgasanteils H2 bzw. 02 an dem jeweiligen Gasgemisch GA, GK wird dadurch ausgeglichen, dass das Verhältnis λ zwischen dem in die jeweilige Zellgruppe eingeleiteten Volumenstrom des Gasgemisches zu dem für eine vollständige elektrochemische Reaktion des jeweiligen Betriebsgasanteils in dieser Zellgruppe stöchiometrisch benötigtem volumenstrom des Gasgemisches für nacheinander durchströmte Zellgruppen zunimmt. Die Abnahme des Reaktionsgasanteils in aufeinander folgenden Zellgruppen wird somit ausgeglichen durch die Zunahme des der jeweilige Zellgruppe zugeführten Volumenstromes des Gasgemisches.

Auf diese Weise steht sämtlichen Brennstoffzellen des Brennstoffzellenblocks 20 ausreichend Reaktionsgas für eine stabile elektrochemische Reaktion zur Verfügung, bei gleichzeitiger Abnahme der Konzentration der Reaktionsgase in den Gasgemischen. Der Brennstoffzellenblock kann somit mit einem guten Wirkungsgrad und gleichzeitig nur geringen Restgas bzw. Abgasmengen betrieben werden.

Zur Vergleichmäßigung der Leistung des Brennstoffzellenblocks 20 wird der Brennstoffzellenblock von den kathoden- und anodenseitigen Gasgemischen GK, GA gegensinnig durchströmt. Hierdurch ist es möglich, dem während der Durchströmung des Brennstoffzellenblockes 20 abnehmenden Sauerstoffanteil 02 in dem kathodenseitigen Gasgemisch GK bzw. dem abnehmenden Wasserstoffanteil H2 in dem anodenseitigen Gasgemisch GA einen jeweils hohe Anteil von frischem Wasserstoff bzw. frischem Sauerstoff gegenüberzustellen.

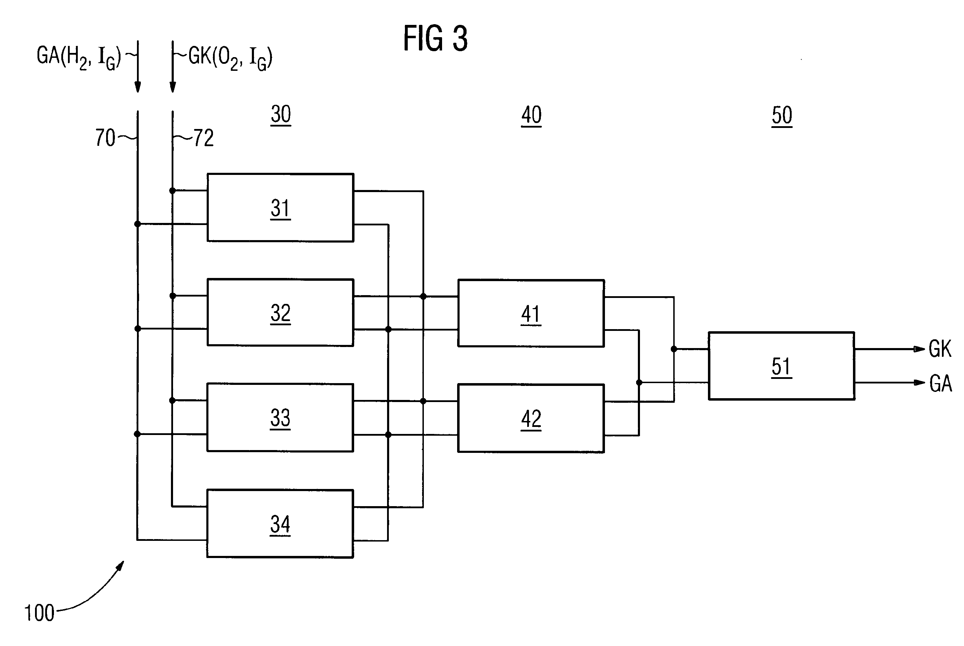

Gemäß FIG 3 kann es sich bei den Brennstoffzellengruppen jedoch auch um nacheinander von einem reaktionsgashaltigen Gasgemisch durchströmte Stufen einer Brennstoffzellenanlage handeln, wobei jede der Stufen jeweils einen oder mehrere parallel von dem Gasgemisch durchströmte Brennstoffzellenblöcke aufweist, deren Brennstoffzellen wiederum jeweils parallel von dem Gasgemisch durchströmt werden.

Die in FIG 3 schematisch dargestellte Brennstoffzellenanlage 100 weist aus Sicht der Reaktionsgasver- und -entsorgung mehrere hintereinander geschaltete Stufen 30, 40, 50 auf. Die erste Stufe 30 umfasst vier Brennstoffzellenblöcke 31 bis 34, die betriebsgasseitig parallel geschaltet sind. Die zweite Stufe 40 weist zwei betriebsgasseitig parallel geschaltete Brennstoffzellenblöcke 41, 42 und die dritte Stufe 50 weist einen einzigen Brennstoffzellenblock 51 auf.

Während des Betriebs der Brennstoffzellenanlage 100 strömt ein anodenseitiges Gasgemisch GA mit Wasserstoffanteilen H2 und Inertgasanteilen IG über die Gasversorgungsleitung 70 parallel in die Anodenseiten der Brennstoffzellenblöcke 31 bis 34 der ersten Stufe 30 der Brennstoffzellenanlage 100. Außerdem strömt ein kathodenseitiges Gasgemisch GK bestehend aus Sauerstoffanteilen 02 und Inertgasanteilen IG über die Gasversorgungsleitung 72 in die Brennstoffzellenblöcke 31 bis 34 der ersten Stufe 30. Nach Durchströmen der ersten Stufe 30 durchströmen die Gasgemische GA, GK parallel die Brennstoffzellenblöcke 41, 42 der zweiten Stufe 40 und zum Abschluss den Brennstoffzellenblock 51 der dritten Stufe 50.

Aufgrund der Nacheinanderschaltung der einzelnen Stufen 30, 40, 50 nimmt in Strömungsrichtung der Reaktionsgasanteil an dem jeweiligen Gasgemisch ab. Die einzelnen Stufen 30, 40, 50 der Brennstoffzellenanlage 100 sind jedoch, z.B. über die jeweilige Brennstoffzellenzahl, derart ausgelegt, dass der abnehmende Reaktionsgasanteil kompensiert wird durch eine entsprechende Zunahmen des Verhältnisses des in die jeweilige Stufe eingeleiteten Volumenstromes des Gasgemisches zu dem für eine vollständige Reaktion des Reaktionsgasanteils in der Stufe stöchiometrisch benötigtem Volumenstromes des Gasgemisches. Sämtliche Brennstoffzellen der Brennstoffzellenanlage 100 können somit mit einem guten Wirkungsgrad betrieben werden, wobei die Brennstoffzellenanlage ein Gasgemisch verlässt, das nur noch geringe Reaktionsgasanteile aufweist. Eine derartige Brennstoffzellenanlage 100 mit mehreren in einer Kaskade angeordneten Stufen 30, 40, 50 kann aus modular aufgebauten gleichartigen Brennstoffzellenblöcken aufgebaut und deshalb preiswert und mit geringem Aufwand in Serie hergestellt werden.

Die in den Ausführungsbeispielen gezeigten Anzahlen von Brennstoffzellengruppen mit ihren jeweiligen Brennstoffzellenzahlen sind nur beispielhaft. Bevorzugt durchströmen die Gasgemische nacheinander so viele Zellgruppen, bis der Reaktionsgasanteil in dem Gasgemisch einen gewünschten vordefinierten Wert unterschreitet. In Abhängigkeit hiervon und von dem Reaktionsgasanteil in dem Gasgemisch vor der Zufuhr zu der ersten Zellgruppe können auch andere Brennstoffzellengruppenzahlen mit jeweils anderen Brennstoffzellenzahlen vorteilhaft sein.

Bevorzugt werden die in die Restgasentsorgungsleitungen geschalteten Ventile 6 (siehe FIG 1 und 2) derart geregelt, dass der Restgasvolumenstrom möglichst klein ist und sich die gewünschten Verhältnisse λ in Strömungsrichtung des Gasgemisches einstellen. Dies ist zum einen dadurch möglich, dass die Spannung der letzten Zellgruppe überwacht wird. Bei einem Absinken der Spannung würde dann der Restgasvolumenstrom durch weiteres Öffnen des Ventils vergrößert werden und umgekehrt. Alternativ kann die Ansteuerung des Ventils 6 auch an den von den Brennstoffzellen erzeugten elektrischen Strom gekoppelt werden. Die Ventilstellung und somit der Restgasvolumenstrom würden dann proportional zu dem elektrischen Strom geregelt werden.

## Patentansprüche

1. Verfahren zum Betrieb einer Brennstoffzellenanordnung (10) mit einem Gasgemisch (G) mit einem Reaktionsgasanteil (H2) und einem Inertgasanteil (IG), wobei das Gasgemisch (G) nacheinander mehrere Brennstoffzellengruppen (1, 2) durchströmt, deren Brennstoffzellen jeweils parallel von dem Gasgemisch (G) durchströmt werden, **dadurch gekennzeichnet, dass** der Inertgasanteil des reaktionsgashaltigen Gasgemischs über 10 Vol % beträgt und dass das Verhältnis (λ) zwischen dem in die jeweilige Zellgruppe (1, 2) eingeleiteten Volumenstrom des Gasgemisches (G) zu dem für eine vollständige Reaktion des Reaktionsgasanteils (H2) in dieser Zellgruppe (1 bzw. 2) stöchiometrisch benötigtem Volumenstrom des Gasgemisches (G) für drei nacheinander durchströmte Zellgruppen (1, 2) zunimmt.

2. Verfahren nach Anspruch 1, wobei das zunehmende Verhältnis (λ) über die Anzahl der Brennstoffzellen und/oder die Größe der Brennstoffzellen und/oder die Stromdichte der Brennstoffzellengruppen (1, 2) eingestellt wird.

3. Verfahren nach Anspruch 2, wobei die Brennstoffzellengruppen (1, 2) jeweils gleichartige Brennstoffzellen umfassen, und das zunehmende Verhältnis (λ) über die Anzahl der Brennstoffzellen in den Brennstoffzellengruppen (1, 2) eingestellt wird.

4. Verfahren nach einem der vorhergehenden Ansprüche, wobei das Gasgemisch (G) nacheinander so viele Zellgruppen (1, 2, 3) durchströmt, bis der Reaktionsgasanteil (H2) in dem Gasgemisch (G) einen vordefinierten Wert unterschreitet.

5. Verfahren nach einem der vorhergehenden Ansprüche, wobei ein die Brennstoffzellenanordnung (10) verlassender Restgasvolumenstrom in Abhängigkeit von der Zellspannung der in Strömungsrichtung des Gasgemisches letzten Zellgruppe (3) oder des von den Brennstoffzellen erzeugten elektrischen Stromes geregelt wird.

6. Brennstoffzellenanordnung (10) mit mehreren Brennstoffzellengruppen (1, 2), die hintereinander in eine Gasversorgungseinrichtung (4) geschaltet sind und deren Brennstoffzellen jeweils parallel über die Gasversorgungseinrichtung (4) von einem Gasgemisch (G) mit einem Reaktionsgasanteil (H2) und einem Inertgasanteil (IG) durchströmbar sind, **dadurch gekennzeichnet, dass** der Inertgasanteil des reaktionsgashaltigen Gasgeschmis über 10 Vol % beträgt und dass die Brennstoffzellengruppen (1, 2) derart ausgebildet sind, dass drei hintereinander in die Gasversorgungseinrichtung (4) geschaltete Zellgruppen (1, 2) mit einem jeweils zunehmenden Verhältnis (λ) zwischen dem in die jeweilige Zellgruppe (1 bzw. 2) eingeleitetem Volumenstrom des Gasgemisches (G) zu dem für eine vollständige Reaktion des Reaktionsgasanteils (H2) in dieser Zellgruppe (1 bzw. 2) stöchiometrisch benötigtem Volumenstrom des Gasgemisches (G) durchströmbar sind, wobei das zunehmende Verhältnis (λ) über die Anzahl der Brennstoffzellen und/oder die Größe der Brennstoffzellen und/oder die Stromdichte der Brennstoffzellengruppen (1, 2) eingestellt ist.

7. Brennstoffzellenanordnung (10) nach Anspruch 6, wobei die Brennstoffzellengruppen (1, 2) jeweils gleichartige Brennstoffzellen umfassen, und das zunehmende Verhältnis (λ) über die Anzahl der Brennstoffzellen in den Brennstoffzellengruppen (1, 2) eingestellt ist.

8. Brennstoffzellenanordnung (10) nach einem der Ansprüche 6 bis 7, wobei sämtliche Brennstoffzellengruppen (12, 14, 16) in einem Brennstoffzellenblock (20) zusammengefasst sind.

9. Brennstoffzellenanordnung (10) nach einem der Ansprüche 6 bis 7, wobei jede der Brennstoffzellengruppen aus einem oder mehreren jeweils parallel von dem Gasgemisch (G) durchströmbaren Brennstoffzellenblöcken (31 - 34, 41 - 42, 51) besteht und somit eine Stufe einer Brennstoffzellenanlage (100) mit mehreren in einer Kaskade angeordneten Stufen (30, 40, 50) bildet.

**Claims**

1. Method of operating a fuel cell arrangement (10) with a gas mixture (G) comprising a reaction gas proportion (H2) and an inert gas proportion (IG), wherein the gas mixture (G) passes consecutively through a number of fuel cell groups (1, 2), the fuel cells of which are each passed through in parallel by the gas mixture (G),
**characterised in that**
the inert gas proportion of the reaction gas-containing gas mixture amounts to above 10% by volume and the ratio ($\lambda$) between the volume flow of the gas mixture (G) introduced into the respective cell group (1, 2) relative to the volume flow of the gas mixture (G) stoichiometrically required for a complete reaction of the reaction gas proportion (H2) in this cell group (1 or 2) increases for three cell groups (1, 2) passed through consecutively.

2. Method according to claim 1, wherein the increasing ratio ($\lambda$) is adjusted by way of the number of fuel cells and/or the size of the fuel cells and/or the current density of the fuel cell groups (1, 2).

3. Method according to claim 2, wherein the fuel cell groups (1, 2) each comprise similar fuel cells, and the increasing ratio ($\lambda$) is adjusted by way of the number of fuel cells in the fuel cell groups (1, 2).

4. Method according to one of the preceding claims, wherein the gas mixture (G) passes consecutively through so many cell groups (1, 2, 3) until the reaction gas proportion (H2) in the gas mixture (G) drops below a predefined value.

5. Method according to one of the preceding claims, wherein a residual gas volume flow leaving the fuel cell arrangement (10) is controlled as a function of the cell voltage of the last cell group (3) in the flow direction of the gas mixture or of the electrical current generated by the fuel cells.

6. Fuel cell arrangement (10) having a number of fuel cell groups (1, 2) which are connected one behind the other in a gas supply device (4) and the fuel cells of which can each be passed through in parallel by a gas mixture (G) having a reaction gas proportion (H2) and an inert gas proportion (IG) via the gas supply device (4),
**characterized in that**
the inert gas proportion of the reaction gas-containing gas mixture amounts to above 10% by volume and the fuel cell groups (1, 2) are embodied such that three cell groups (1, 2) connected one behind the other in the gas supply device (4) with an in each case increasing ratio ($\lambda$) between the volume flow of the gas mixture (G) introduced into the respective cell group (1 or 2) relative to the volume flow of the gas mixture (G) stoichiometrically required for a complete reaction of the reaction gas proportion (H2) in this cell group (1 or 2) can be passed through, wherein the increasing ratio ($\lambda$) is adjusted by way of the number of fuel cells and/or the size of the fuel cells and/or the current density of the fuel cell groups (1, 2).

7. Fuel cell arrangement (10) according to claim 6, wherein the fuel cell groups (1, 2) each comprise similar fuel cells, and the increasing ratio ($\lambda$) is adjusted by way of the number of fuel cells in the fuel cell groups (1, 2).

8. Fuel cell arrangement (10) according to one of claims 6 to 7, wherein all fuel cell groups (12, 14, 16) are combined in a fuel cell block (20).

9. Fuel cell arrangement (10) according to one of claims 6 to 7, wherein each of the fuel cell groups consists of one or a number of fuel cell blocks (31-34, 41-42, 51) which can be passed through in each instance in parallel by the gas mixture (G), and thus forms a stage of a fuel cell system (100) with a number of stages (30, 40, 50) arranged in a cascade.

**Revendications**

1. Procédé pour faire fonctionner un agencement (10) de piles à combustible avec un mélange (G) gazeux ayant une proportion (H2) de gaz de réaction et une proportion (IG) de gaz inerte, le mélange (G) gazeux passant dans successivement plusieurs groupes (1, 2) de piles à combustible, dont les piles à combustibles sont parcourues respectivement en parallèle par le mélange (G) gazeux,

**caractérisé en ce que**

la proportion de gaz inerte du mélange gazeux contenant du gaz de réaction est supérieure à 10 % en volume et **en ce que** le rapport ($\lambda$) entre le courant en volume, introduit dans le groupe (1, 2) de piles respectif, du mélange (G) gazeux au courant en volume, nécessaire stoechiométriquement pour une réaction complète de la proportion (H2) de gaz de réaction dans ce groupe (1 et 2) de piles, du mélange (G) gazeux augmente pour trois groupes (1, 2) de piles parcourus successivement.

2. Procédé suivant la revendication 1, dans lequel on règle le rapport ($\lambda$) croissant par le nombre des piles à combustible et/ou par la dimension des piles à combustible et/ou par la densité de courant des groupes (1, 2) de piles à combustible.

3. Procédé suivant la revendication 2, dans lequel les groupes (1, 2) de piles à combustible comprennent respectivement des piles à combustible et on règle le rapport ($\lambda$) croissant par le nombre des piles à combustible dans les groupes (1, 2) de piles à combustible.

4. Procédé suivant l'une des revendications précédentes, dans lequel le mélange (G) gazeux passe successivement dans tellement de groupes (1, 2) de piles que la proportion (H2) de gaz de réaction dans le mélange (G) gazeux devient inférieure à une valeur définie à l'avance.

5. Procédé suivant l'une des revendications précédentes, dans lequel on régule un courant en volume de gaz restant quittant l'agencement (10) de piles à combustible en fonction de la tension de pile du dernier groupe (3) de piles dans le sens d'écoulement du mélange gazeux ou du courant électrique produit par les piles à combustible.

6. Agencement (10) de piles à combustible ayant plusieurs groupes (1, 2) de piles à combustible, qui sont montés les uns derrière les autres dans une direction (4) d'alimentation en gaz et dont les piles à combustible peuvent être parcourues respectivement en parallèle par l'intermédiaire du dispositif (4) d'alimentation en gaz par un mélange (G) gazeux ayant une proportion (H2) de gaz de réaction et une proportion (IG) de gaz inerte,

**caractérisé en ce que**

la proportion de gaz inerte du mélange gazeux contenant du gaz de réaction est supérieure à 10 % en volume et **en ce que** les groupes (1, 2) de piles à combustible sont constitués de manière à ce que trois groupes (1, 2) de piles montés les uns derrière les autres dans la direction (4) d'alimentation en gaz puissent être parcourus avec un rapport ($\lambda$) respectivement croissant entre le courant en volume, introduit par le groupe (1 et 2) de piles respectif, du mélange (G) gazeux et le courant en volume, nécessité stoechiométriquement pour une réaction complète de la proportion (H2) de gaz de réaction dans ce groupe (1 et 2) de piles, du mélange (G) gazeux, le rapport ($\lambda$) croissant étant réglé par le nombre des piles à combustible et/ou par la dimension des piles à combustible et/ou par la densité de courant des groupes (1, 2) de piles à combustible.

7. Agencement (10) de piles à combustible dans lequel les groupes (1, 2) de piles à combustible comprennent respectivement des piles à combustible de même type et le rapport ($\lambda$) croissant est réglé par le nombre des piles à combustibles dans les groupes (1, 2) de piles à combustible.

8. Agencement (10) de piles à combustible suivant l'une des revendication 6 à 7, dans lequel l'ensemble des groupes (12, 14, 16) de piles à combustible est rassemblé en un bloc (20) de piles à combustible.

9. Agencement (10) de piles à combustible suivant l'une des revendication 6 à 7, dans lequel chacun des groupes de piles à combustible est constitué d'un ou de plusieurs blocs (31 - 34, 41 - 42, 51) de piles à combustible pouvant être parcourus respectivement en parallèle par le mélange (G) gazeux et forme ainsi un étage d'une installation (100) de piles à combustible ayant plusieurs étages (30, 40, 50) disposés suivant une cascade.

FIG 1

FIG 2

EP 1 750 321 B1

# FIG 3

EP 1 750 321 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040185316 A1
- US 3711333 A
- US 3668011 A